# EUROPEAN PATENT SPECIFICATION

(11) **EP 3 264 162 B1**
(45) Date of publication and mention of the grant of the patent: **12.01.2022**
(21) Application number: 16305817.5
(22) Date of filing: 30.06.2016
(51) Int. Cl.: G02C 5/18, G02C 11/00

(54) **SPECTACLE FRAME ELEMENT**
BRILLENFASSUNGSELEMENT
ÉLÉMENT DE MONTURE DE LUNETTES

(43) Date of publication of application: 03.01.2018
(73) Proprietor: Essilor International, 94220 Charenton-le-Pont (FR)
(72) Inventor: BROUTIN, Guillaume, 94227 CHARENTON-LE-PONT (FR); GIL, Paul, 94227 CHARENTON-LE-PONT (FR); LORE, Marie, 94227 CHARENTON-LE-PONT (FR); ROUSSEAU, Denis, 94227 CHARENTON-LE-PONT (FR); SAHLER, Jean, 94227 CHARENTON-LE-PONT CEDEX (FR)
(74) Representative: Cabinet Novitech

(56) References cited:
- WO-A2-2012/068527
- FR-A1- 3 027 412
- JP-A- H11 326 841
- JP-A- 2001 021 845
- US-A- 5 835 184
- US-A1- 2009 296 044
- US-A1- 2012 002 159
- US-A1- 2014 028 966
- US-A1- 2015 378 180

## Description

### FIELD OF THE INVENTION

The invention relates to a method of manufacturing a spectacle frame element comprising a heat conducting reinforcement support.

### BACKGROUND OF THE INVENTION

Electronic spectacle frames have an important and rapid growth. More and more electronic spectacle frames are being develop with a greater variety of different electronic elements.

Electronic spectacle frame may comprise many different electronic elements such as sensors, displays, active lenses, batteries, processors for local processing and communication devices, and charging devices.

With the growing interest in electronic spectacle frames, it has become important to provide a solution that allows including electronic components in a spectacle frame.

Examples of such spectacle frames can be found in documents WO 2012/068527, US 2015378180 or US 2014028966.

Such electronic components usually generate heat when used. The heat generated by the electronic components into a spectacle frame must be dissipated to improve reliability, comfort and prevent premature failure.

Usual techniques for heat dissipation like fans for air cooling or liquid cooling cannot be applied because of their dimensions and impact on consumption and aesthetic of the spectacle frame.

Therefore, there is a need for a solution allowing to provide a solution for heat dissipation of electronic components to be included in a spectacle frame.

An aim of the present invention is to propose such solution.

### SUMMARY OF THE INVENTION

Disclosed is a spectacle frame element comprising a reinforcement support, wherein the reinforcement support comprises an electronic support part supporting at least an electronic component and a wire core part extending from the electronic support part through the spectacle frame element, the electronic support and the wire core part are embodied in the spectacle frame element.

Advantageously, the spectacle frame element provides a solution for dissipating heat of an electronic component and is compatible with the traditional manufacturing spectacle frame process.

Examples for such a process are shown in documents JPH11326841 and JP 2001021845.

The spectacle frame element further allows dissipating heat from an electronic component while preserving the rigidity of the spectacle frame element and the ability of the spectacle frame to be waterproof.

According to further embodiments which can be considered alone or in combination:
- the reinforcement support is made of a heat conducting material; and/or
- the reinforcement support is made of a metallic material, for example stainless steel; and/or
- the spectacle frame is in cellulose acetate; and/or
- the electronic component comprises a radio wave emitting component; and/or
- the electronic support part of the reinforcement support comprises at least a window arranged to be transparent to light and/or radio waves; and/or
- the spectacle frame element is a spectacle temple; and/or
- the electronic component comprises a light emitting component, for example a LED and the material of the spectacle frame element is at least partly transparent to light; and/or
- the wire core part of the reinforcement support is tubular and an electrical wire and/or an optical fiber extends from the electronic component trough the tubular wire core part of the reinforcement support; and/or
- the wire core part extends along at least 50% of the length of the spectacle temple; and/or
- the reinforcement support further comprises a hinge so as to allow fixing the spectacle frame element to a further spectacle frame element.

The invention relates to a method of manufacturing a spectacle frame element, wherein the method comprises:
- a spectacle frame element providing step, during which a spectacle frame element is provided,
- a reinforcement support providing step, during which a reinforcement support made of a heat conducting material and comprising an electronic support part supporting at least an electronic component and a wire core part extending from the electronic support is provided,
- an embodying step during which the electronic support and the wire core part are embodied in the spectacle frame element upon locally heating the spectacle frame element.

The spectacle frame element may be a spectacle temple and the method may further comprises:
- a slot cutting step, during which a least one slot is cut in the spectacle temple,
- a half hinge positioning step, during which a metal half hinge is positioned in the slot,
- a heating step, during which the spectacle frame is heated using a capitron machine inducing ultrasonic vibrations in the metal half hinge and creates heat of friction.

### BRIEF DESCRIPTION OF THE DRAWINGS

Embodiments of the invention will now be described, by way of example only, and with reference to the following drawings in which:
- Figure 1 is a schematic representation of spectacle frame
- Figure 2 is a schematic representation of spectacle frame temple
- Figure 3 is a schematic representation of a reinforcement support intended to be embodied in a spectacle frame element in the manufacturing method according to the invention,
- Figure 4 is a chart flow of a manufacturing method of the invention, and
- Figure 5 illustrates the embodying step of the invention.

### DETAILED DESCRIPTION OF PREFERRED EMBODIMENTS

Elements in the figures are illustrated for simplicity and clarity and have not necessarily been drawn to scale. For example, the dimensions of some of the elements in the figure may be exaggerated relative to other elements to help improve the understanding of the embodiments of the present invention.

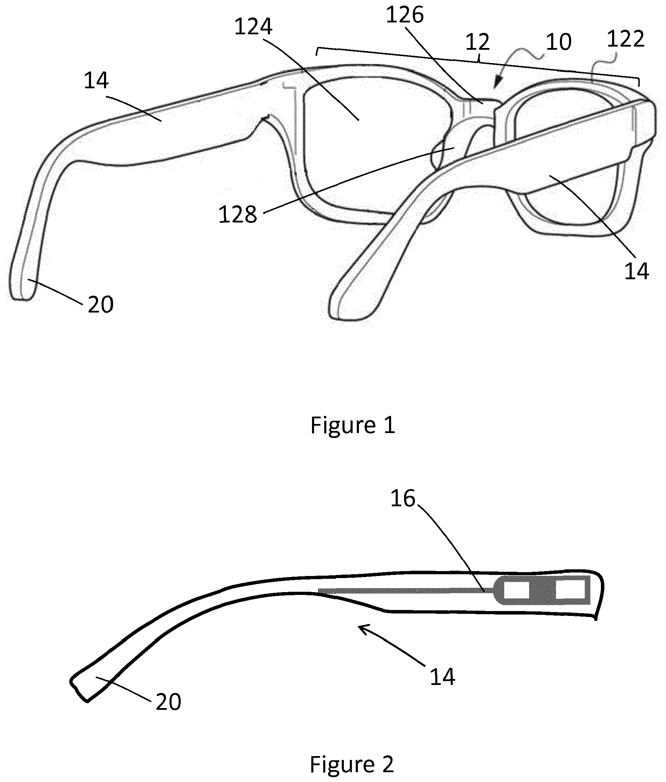

Figure 1 represents an example of a spectacle frame 10. The spectacle frame 10 comprises a front part 12, a first and second temples 14.

The first and second temples 14 are configured to be attached to the front part 12, for example using hinges and screws.

As represented on figure 1, the front part 12 may comprise frame rims 122 arranged to receive optical lenses 124, for example ophthalmic lenses. The frame rims are linked by a bridge 126 and may comprise nose pad 128 arranged to rest on the nose of the user when the frame in worn.

The first and second temples may comprise tips 20 arranged to fit around the ears of a user when the frame is being worn by said user.

Figure 2, is a schematic representation of an example of a spectacle frame element 14 with a reinforcement support 16 to provide rigidity to the spectacle frame element 14.

The spectacle frame element represented on figure 2 is a spectacle frame temple. The spectacle frame element may be made of plastic material. One of the most used plastic material for spectacle frame is cellulose acetate.

During the traditional cellulose acetate frame manufacturing process, a reinforcement support is mechanically inserted into each temples to improve the overall frame rigidity.

The manufacturing method according to the invention maintains this traditional process step unchanged, with a reinforcement support adapted to the needs of heat dissipation of electronic components.

The reinforcement support is made of a heat conducting material, for example a material having a thermal conductivity greater than or equal to 10 W·m⁻¹·K⁻¹, for example greater than or equal to 15 W·m⁻¹·K⁻¹.

Typically, the reinforcement support may be made of a metallic material, such as stainless steel, aluminum, of thermally conductive plastics.

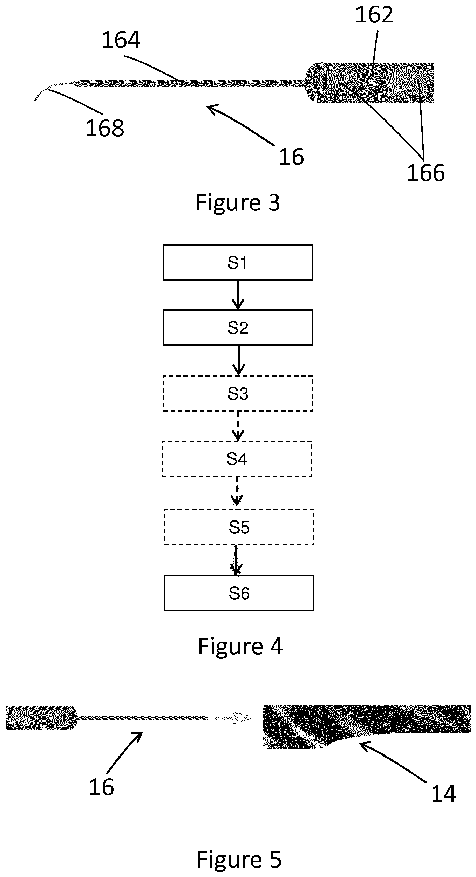

As illustrated on figure 3, the reinforcement support 16 used to reinforce the spectacle frame element in the manufacturing method of the invention comprises an electronic support part 162 and a wire core part 164. The electronic support part 162 and the wire core part 164 are embodied in the spectacle frame element.

The electronic support part 162 is configured to support at least an electronic component 18.

The electronic component 18 may typically be a PCB board comprising electronic elements or a battery.

For example, the electronic component comprises a radio wave emitting component, typically adapted for Bluetooth communication.

The electronic component may comprise a light emitting component, for example a LED. According to such embodiment the material of the spectacle frame element is preferably at least partly transparent to light so as to allow the light emitted by the electronic component to be seen.

In the example represented on figure 3, the electronic support part 162 comprises two windows 166. The windows 166 may be arranged to be transparent to light and/or radio waves, for example such windows are through. Advantageously, such electronic support is better adapted when the electronic component is a radio wave or light emitting component.

The wire core part 164 of the reinforcement support 16 extends from the electronic support part 162 through the spectacle frame element.

The wire core part 164 of the reinforcement support 16 typically extends along at least 50% of the length of the spectacle temple, for example at least 75 % so as to increase the rigidity of the spectacle temple.

As represented on figure 3, the wire core part of the reinforcement may be tubular and electrical wire(s) 168 and/or optical fiber(s) may extend from the electronic component trough the tubular wire core part of the reinforcement support.

Although not represented on the figures, the reinforcement support may further comprise a hinge so as to allow fixing the spectacle frame element to a further spectacle frame element.

Advantageously, the spectacle frame element may be obtained using a traditional spectacle frame manufacturing process and allows integrating electronic component in the spectacle frame while assuring heat dissipation.

The invention relates to a method of manufacturing a spectacle frame according to the invention.

As illustrated on figure 4, the method comprises at least:
- a spectacle frame element providing step S1,
- a reinforcement support providing step S2, and
- an embodying step S6.

A spectacle frame element, for example a spectacle frame temple or front part is provided during the spectacle frame element providing step S1.

A reinforcement support is provided during the reinforcement support providing step S2. The provided reinforcement support is made of a heat conducting material and comprises at least an electronic support part supporting at least an electronic component and a wire core part extending from the electronic support.

The reinforcement support may comprise the different arrangement previously described in greater detail.

During the embodying step S6, as illustrated on figure 5, the electronic support and the wire core part are embodied in the spectacle frame element upon locally heating the spectacle frame element.

When the spectacle frame element is a spectacle temple and the method for the invention may further comprise prior to the embodying step S6:
- a slot cutting step S3,
- a half hinge positioning step S4, and
- a heating step S5.

During the slot cutting step S3, at least one slot is cut in the spectacle temple.

A metal half hinge is positioned in the slot cut in the spectacle temple during the half hinge positioning step S4.

The spectacle temple is heated using a capitron machine inducing ultrasonic vibrations in the metal half hinge and creates heat of friction during the heating step S5 so as to allow embodying the electronic support and the wire core part in the spectacle temple. The friction causes the plastic of the frame to melt locally around the hinge to bond the hinge and the reinforcement support to the frame, this process is more secure than gluing or other types of bonding or mounting.

The invention has been described above with the aid of embodiments without limitation of the general inventive concept.

Many further modifications and variations will suggest themselves to those skilled in the art upon making reference to the foregoing illustrative embodiments, which are given by way of example only and which are not intended to limit the scope of the invention, that being determined solely by the appended claims.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the invention.

## Claims

1. Method of manufacturing a spectacle frame element (14) comprising a reinforcement support (14), wherein the method comprises:
- a spectacle frame element providing step (S1), during which a spectacle frame element (14) is provided,
- a reinforcement support providing step (S2), during which the reinforcement support (16) comprising an electronic support part (162) supporting at least an electronic component (18) and a wire core part (164) extending from the electronic support and configured to extend through the spectacle frame element is provided, the reinforcement support (16) being made of a heat conducting material,
- an embodying step (S6) during which the electronic support and the wire core part are embodied in the spectacle frame element (14) upon locally heating the spectacle frame element.

2. The method according to claim 1, wherein the spectacle frame element (14) is a spectacle temple and the method further comprises:
- a slot cutting step (S3) during which a least one slot is cut in the spectacle temple,
- a half hinge positioning step (S4) during which a metal half hinge is positioned in the slot,
- a heating step (S5) during which the spectacle frame element (14) is heated using a capitron machine configured to induce ultrasonic vibrations in the metal half hinge and to create heat of friction.

3. The method according to any of the preceding claims, wherein the reinforcement support (16) is made of a metallic material, for example stainless steel.

4. The method according to any of the preceding claims, wherein the spectacle frame element (14) is in cellulose acetate.

5. The method according to any of the preceding claims, wherein the electronic component (18) comprises a radio wave emitting component.

6. The method according to any of the preceding claims, wherein the electronic support part (162) of the reinforcement support (16) comprises at least a window (166) arranged to be transparent to light and/or radio waves.

7. The method according to any of the preceding claims, wherein the electronic component (18) comprises a light emitting component, for example a LED and the material of the spectacle frame element (14) is at least partly transparent to light.

8. The method according to any of the preceding claims, wherein the wire core part of the reinforcement support (16) is tubular and an electrical wire (168) and/or an optical fiber extends from the electronic component (18) through the tubular wire core part of the reinforcement support.

9. The method according to any of the preceding claims 2 to 8, wherein the wire core part (164) extends along at least 50% of the length of the spectacle temple.

10. The method according to any of the preceding claims, wherein the reinforcement support (16) further comprises a hinge so as to allow fixing the spectacle frame element (14) to a further spectacle frame element.

## Patentansprüche

1. Verfahren zum Herstellen eines Brillenfassungselements (14), einen Verstärkungsträger (14) umfassend, wobei das Verfahren Folgendes umfasst:
- einen Schritt (S1) des Bereitstellens des Brillenfassungselements, während dem ein Brillenfassungselement (14) bereitgestellt wird,
- einen Schritt (S2) des Bereitstellens des Verstärkungsträgers, während dem der Verstärkungsträger (16), der ein elektronisches Trägerbauteil (162) umfasst, das mindestens eine elektronische Komponente (18) und ein Drahtkernbauteil (164) trägt, das sich aus dem elektronischen Träger erstreckt und eingerichtet ist, um sich durch das Brillenfassungselement zu erstrecken, bereitgestellt wird, wobei der Verstärkungsträger (16) aus einem wärmeleitenden Material angefertigt ist,
- einen Schritt (S6) des Ausführens, während dem der elektronische Träger und das Drahtkernbauteil in dem Brillenfassungselement (14) bei lokalem Erhitzen des Brillenfassungselements ausgeführt werden.

2. Verfahren nach Anspruch 1, wobei das Brillenfassungselement (14) ein Brillenbügel ist und das Verfahren weiterhin Folgendes umfasst:
- einen Schritt (S3) des Schneidens eines Schlitzes, während dem mindestens ein Schlitz in den Brillenbügel geschnitten wird,
- einen Schritt (S4) des Positionierens einer Scharnierhälfte, während dem eine Metallscharnierhälfte in dem Schlitz positioniert wird,
- einen Schritt (S5) des Erwärmens, während dem das Brillenfassungselement (14) unter Verwendung einer Capitron-Maschine erwärmt wird, die eingerichtet ist, um Ultraschallschwingungen in der Metallscharnierhälfte zu bewirken und Reibungswärme zu erzeugen.

3. Verfahren nach einem der vorhergehenden Ansprüche, wobei der Verstärkungsträger (16) aus einem metallischen Material, beispielsweise Edelstahl, angefertigt ist.

4. Verfahren nach einem der vorhergehenden Ansprüche, wobei das Brillenfassungselement (14) ein Celluloseacetat ist.

5. Verfahren nach einem der vorhergehenden Ansprüche, wobei die elektronische Komponente (18) eine Funkwellen emittierende Komponente umfasst.

6. Verfahren nach einem der vorhergehenden Ansprüche, wobei das elektronische Trägerbauteil (162) des Verstärkungsträgers (16) mindestens ein Fenster (166) umfasst, das für Licht und/oder Funkwellen durchsichtig eingerichtet ist.

7. Verfahren nach einem der vorhergehenden Ansprüche, wobei die elektronische Komponente (18) eine lichtemittierende Komponente, beispielsweise eine LED, umfasst und das Material des Brillenfassungselements (14) für Licht mindestens teilweise durchsichtig ist.

8. Verfahren nach einem der vorhergehenden Ansprüche, wobei das Drahtkernbauteil des Verstärkungsträgers (16) röhrenförmig ist und sich ein elektrischer Draht (168) und/oder eine Lichtleiterfaser aus der elektronischen Komponente (18) durch das röhrenförmige Drahtkernbauteil des Verstärkungsträgers erstreckt.

9. Verfahren nach einem der vorhergehenden Ansprüche 2 bis 8, wobei sich das Drahtkernbauteil (164) entlang mindestens 50 % der Länge des Brillenbügels erstreckt.

10. Verfahren nach einem der vorhergehenden Ansprüche, wobei der Verstärkungsträger (16) weiterhin ein Scharnier umfasst, um so Befestigen des Brillenfassungselements (14) an einem weiteren Brillenfassungselement zu ermöglichen.

## Revendications

1. Procédé de fabrication d'un élément de monture de lunettes (14) comprenant un support de renforcement (14), dans lequel le procédé comprend :
- une étape de fourniture d'élément de monture de lunettes (S1), durant laquelle un élément de monture de lunettes (14) est fourni,
- une étape de fourniture de support de renforcement (S2), durant laquelle le support de renforcement (16) comprenant une partie de support électronique (162) supportant au moins un composant électronique (18) et une partie d'âme de fil (164) s'étendant à partir du support électronique et configurée pour s'étendre à travers l'élément de monture de lunettes est fourni, le support de renforcement (16) étant fait d'un matériau conducteur thermique,
- une étape d'incorporation (S6) durant laquelle le support électronique et la partie d'âme de fil sont incorporés dans l'élément de monture de lunettes (14) lors du chauffage local de l'élément de monture de lunettes.

2. Procédé selon la revendication 1, dans lequel l'élément de monture de lunettes (14) est une branche de lunettes et le procédé comprend en outre :
- une étape de découpe de fente (S3) durant laquelle au moins une fente est découpée dans la branche de lunettes,
- une étape de positionnement de demi-charnière (S4) durant laquelle une demi-charnière métallique est positionnée dans la fente,
- une étape de chauffage (S5) durant laquelle l'élément de monture de lunettes (14) est chauffé en utilisant une machine capitron configurée pour provoquer des vibrations ultrasoniques dans la demi-charnière métallique et pour créer une chaleur de friction.

3. Procédé selon l'une quelconque des revendications précédentes, dans lequel le support de renforcement (16) est fait d'un matériau métallique, par exemple de l'acier inoxydable.

4. Procédé selon l'une quelconque des revendications précédentes, dans lequel l'élément de monture de lunettes (14) est en acétate de cellulose.

5. Procédé selon l'une quelconque des revendications précédentes, dans lequel le composant électronique (18) comprend un composant d'émission d'ondes radio.

6. Procédé selon l'une quelconque des revendications précédentes, dans lequel la partie de support électronique (162) du support de renforcement (16) comprend au moins une fenêtre (166) agencée pour être transparente à de la lumière et/ou des ondes radio.

7. Procédé selon l'une quelconque des revendications précédentes, dans lequel le composant électronique (18) comprend un composant luminescent, par exemple une LED et le matériau de l'élément de monture de lunettes (14) est au moins partiellement transparent à la lumière.

8. Procédé selon l'une quelconque des revendications précédentes, dans lequel la partie d'âme de fil du support de renforcement (16) est tubulaire et un fil électrique (168) et/ou une fibre optique s'étend à partir du composant électronique (18) à travers la partie d'âme de fil tubulaire du support de renforcement.

9. Procédé selon l'une quelconque des revendications précédentes 2 à 8, dans lequel la partie d'âme de fil (164) s'étend le long d'au moins 50 % de la longueur de la branche de lunettes.

10. Procédé selon l'une quelconque des revendications précédentes, dans lequel le support de renforcement (16) comprend en outre une charnière afin de permettre de fixer l'élément de monture de lunettes (14) à un élément de monture de lunettes supplémentaire.
